# EUROPÄISCHE PATENTSCHRIFT

(11) **EP 0 616 924 B1**
(45) Veröffentlichungstag und Bekanntmachung des Hinweises auf die Patenterteilung: **04.12.1996**
(21) Anmeldenummer: 93104888.8
(22) Anmeldetag: 24.03.1993
(51) Int. Cl.: B60R 16/02

(54) **Vorrichtung und Verfahren zur drahtlosen Daten- und Energieübertragung**
Device and procedure for wireless transmission of data and power
Dispositif et procédé pour la transmission sous fil de données et d'énergie

(43) Veröffentlichungstag der Anmeldung: 28.09.1994
(73) Patentinhaber: SIEMENS AKTIENGESELLSCHAFT, 80333 München (DE)
(72) Erfinder: Swart, Martin, Ing., W-8407 Obertraubling (DE)

(56) Entgegenhaltungen:
- EP-A- 0 183 580
- EP-A- 0 348 818
- EP-A- 0 528 463
- DE-A- 4 031 827
- PATENT ABSTRACTS OF JAPAN vol. 7, no. 226 (E-202)(1371) 7. Oktober 1983; & JP-A-58 115 945 ( TOYODA GOSEI K. K. ) 9. Juli 1983

## Beschreibung

Die Erfindung betrifft eine Vorrichtung nach dem Oberbegriff des Patentanspruchs 1 sowie ein Verfahren zur Steuerung und Auswertung der im Patentanspruch 1 vorgesehenen Maßnahmen.

Die Übertragung von Energie von einem feststehenden Teil auf ein bewegliches Teil z.B. zum Betreiben von Schaltungselementen oder zur Positionierung eines Roboterarms wurde bisher weitgehend über elektrische Leitungen vorgenommen.

Die Energie beispielsweise vom Lenkstock zum Lenkrad im Kraftfahrzeugbau wurde bisher über Schleifkontakte oder eine Wickelfeder übertragen. Über eine solche Strecke können natürlich auch Daten übertragen werden. Der Nachteil einer derartigen Übertragung liegt u.a. in einem hohen Verschleiß der Teile, gegebenenfalls in der Erzeugung eines unangenehmen Geräusches oder in der Empfindlichkeit auf mechanische Verzögerungen oder Beschleunigungen.

Aus den Patent Abstracts of Japan, vol. 7, no. 226 (E-202)(1371) 7.10.83 & JP-A-58 115 945 ist ein gattungsbildender Übertrager zum Übertragen von Energie und Daten vom Lenkradstock zum Lenkrad eines Fahrzeugs bekannt. Der Ablauf der Übertragung wird durch zu beiden Seiten des Übertragers angeordnete Schaltungsmitteln gesteuert.

Durch die DE-OS 41 20 650 ist eine Vorrichtung zur Übertragung von elektrischer Energie und Daten in Kraftfahrzeugen bekannt, bei der die im Lenkrad benötigte Energie auf induktivem Wege über Spulen eines Übertragers übertragen wird. Die Primärspule wird durch einen Schalter angesteuert, so daß sich nach dem Einschalten magnetische Energie aufbaut, die nach dem Abschalten in der Sekundärspule entladen wird, die zu einem Kondensator und einen Verbraucher geführt wird. Die elektrische Energie wird lenkradseitig über eine Gleichrichterschaltung in eine Gleichspannung umgewandelt und durch die lenkradseitige Elektronik geregelt. Die Höhe der übertragenen Leistung wird durch das Verhältnis von Einschalt-und Ausschaltzeit des Schalters bestimmt. Im geregelten Betrieb wird nur soviel Energie übertragen, wie auf der Lenkradseite benötigt wird. Dies geschieht durch Hin- und Herschalten zwischen verschiedenen Pulsbreiten.

Die Daten von der Lenkrad- zur Fahrerseite bzw. von der Fahrerseite zum Lenkrad werden über einen von der induktiven Energieübertragung unabhängigen Kondensator gesendet. Der Kondensator ist fahrzeug- und lenkradseitig an gleichartige Ansteuer- und Auswerteschaltungen angeschlossen, da Daten in beiden Richtungen übertragen werden. Der Kondensator ist koaxial zum Übertrager angeordnet.

Aufgabe der Erfindung ist es, eine Vorrichtung und ein Verfahren aufzuzeigen, mit dem eine Übertragung von Energie sowie Daten zuverlässig möglich ist.

Die gestellte Aufgabe wird erfindungsgemäß durch den Patentanspruch 1 gelöst. Vorteilhafte Weiterbildungen sind in den Unteransprüchen gekennzeichnet.

Ein großer Vorteil der Erfindung besteht darin, daß auf eine zweite Übertragungsstrecke für die Datenübertragung verzichtet werden kann. Während der Energieübertragungsphase können praktisch gleichzeitig, d.h. nur mit einer kurzen Unterbrechung der Energiespeicherung außerdem Daten in beiden Richtungen übertragen werden, was den hardwaremäßigen Aufwand einer solchen Übertragung verringert.

Dieses sogenannte verschachtelte Übertragen kann natürlich auch während der Energieabgabephase vorgenommen werden, allerdings unter Einbüßung des Vorteils, daß während der Informationsübertragung auch Energie übertragen werden kann.

Die Erfindung wird nun anhand von fünf Figuren näher erläutert.

Es zeigen:
Fig. 1 eine Blockschaltung zur Übertragung von Energie und Informationsdaten über einen Übertrager;
Fig. 2A bis 2E den primärseitigen- und sekundärseitigen Strom- und Spannungsverlauf am Übertrager während der Energiespeicherphase und der Energieabgabephase;
Fig. 3A bis 3D die Informationsübertragung von der Sekundärseite auf die Primärseite anhand von graphischen Darstellungen;
Fig. 4A bis 4D die Informationsübertragung von der Primärseite auf die Sekundärseite anhand von graphischen Darstellungen; und
Fig. 5A bis 5B jeweils die Spannung an der Primärwicklung mit unterschiedlichen Synchronisationsmöglichkeiten.

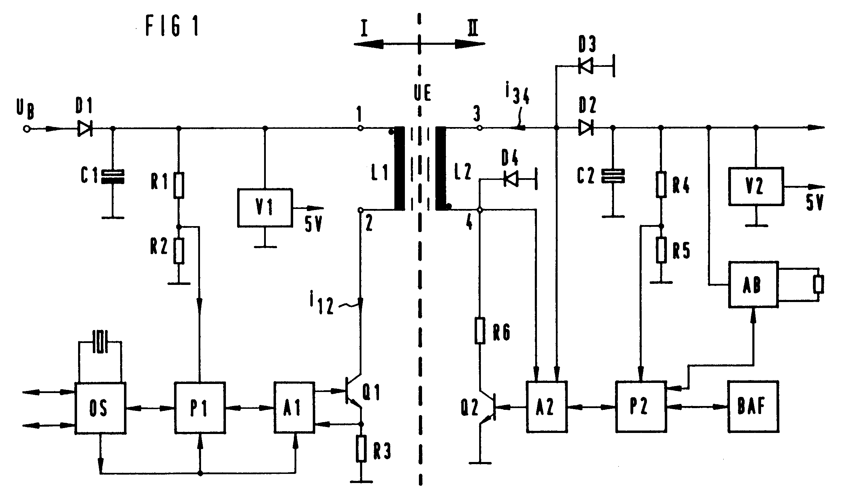

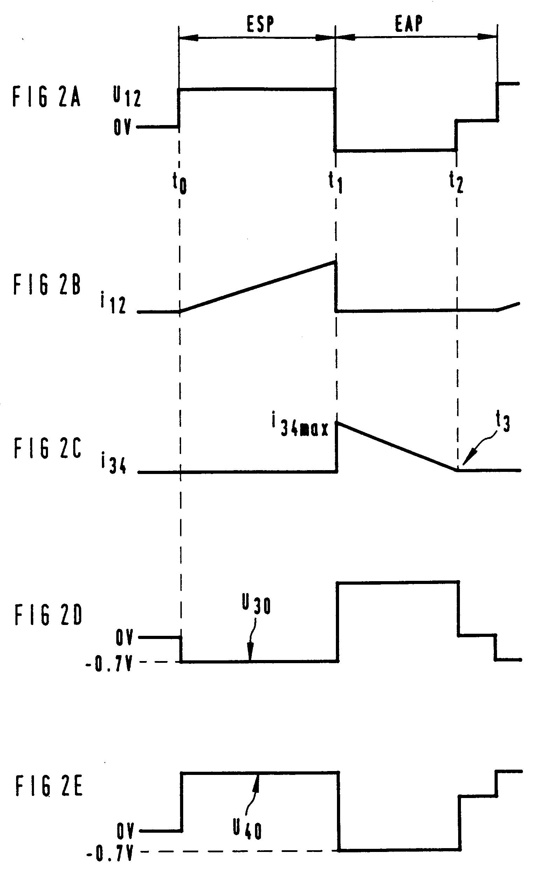

Bei der in Fig. 1 dargestellten Schaltungsanordnung ist ein Übertrager Ü vorgesehen, der eine primärseitige (I) erste Wicklung L1 mit den Anschlüssen 1 und 2 und eine sekundärseitige (II) entgegen dem Wickelsinn der Wicklung L1 angeordnete zweite Wicklung L2 mit den Anschlüssen 3 und 4 aufweist. Der Übertrager Ü trennt primärseitig angeordenete Bausteine von sekundärseitig angeordneten elektrischen Bausteinen.

Auf der Primärseite liegt eine Versorgungsspannung U_{B} an einer Diode D1 an, die als Verpolungsschutz dient und die Versorgung mit einer eventuell falsch gepolten Versorgungsspannung verhindert. Ein sich anschließender Kondensator C1 dient zur Glättung der Spannung U_{B}. Am Anschluß 1 der Wicklung L1 liegen zwei in Reihe geschaltete Widerstände R1, R2 an, die an Masse geführt sind und einen Spannungsteiler bilden. Die Verbindung zwischen R1 und R2 ist an einen Prozesssor P1 geführt, der die Überwachung der Versorgungsspannung vornimmt. Weiterhin ist ein 5 Volt-Regler V1 vorgesehen, der ebenfalls mit dem Anschluß 1 der Wicklung L1 und mit Masse in Verbindung steht und eine geregelte Spannung an den Prozessor P1, weiterhin an eine Ansteuer- und Auswertelogik A1 sowie an ein CAN- oder ABUS- Interface OS liefert. Der Prozessor P1 und die Ansteuer- und Auswertelogik A1 sind untereinander mit einem Bus verbunden. Der Oszillator des CAN- oder ABUS- Interface OS taktet den Prozessor P1 und die Ansteuer- und Auswertelogik A1.

Am Anschluß 2 der Wicklung L1 ist ein Schalttransistor Q1 sowie damit in Reihe ein Widerstand R3 geschaltet, der an Masse endet. Der Schalttransistor Q1 wird durch die Ansteuer- und Auswertelogik A1 geschaltet, die auch den durch die Wicklung L1 fließenden Strom i₁₂ auswertet.

Auf der Sekundärseite II steht der Anschluß 3 der Wicklung L2 über eine Diode D2 und einen Glättungskondensator C2 wiederum mit einem 5 Volt-Regler V2, einem Spannungsteiler R4, R5, wobei die Verbindungsstelle zwischen R4 und R5 an einen Prozessor P2 geführt ist, und mit einem Airbag AB in Verbindung. Es ist weiterhin ein Bedien- und Anzeigefeld BAF sowie eine Ansteuer- und Auswertelogik A2 vorgesehen, die über Busse miteinander verbunden sind. Die Ansteuer- und Auswertelogik A2 ist sowohl an dem Anschluß 3 als auch an dem Anschluß 4 der Wicklung L2 angeschlossen, wobei an diesen Anschlüssen die Dioden D3 und D4 zur Spannungsbegrenzung angeschlossen sind. Der Anschluß 4 der Wicklung L2 liegt über einen Widerstand R6 und einem sich daran anschließenden Schalttransistor Q2 an einer sekundärseitigen Masse, wobei der Schalttransistor Q2 von der Ansteuer- und Auswertelogik A2 gesteuert wird.

Die Fig. 2 zeigt den primär- und sekundärseitigen Strom- und Spannungsverlauf am Übertrager während der Energiespeicherphase ESP und der Energieabgabephase EAP.

In Fig. 2A ist der Spannungsverlauf an der Primärwicklung L1 dargestellt. Zunächst beträgt die Spannung U₁₂ zwischen den Anschlüssen 1,2 der Wicklung L1 Null Volt, wenn der Transistor Q1 nichtleitend ist. Der Transistor Q1 ist zum Zeitpunkt t₀ leitend, wobei sich dann eine Spannung U₁₂ an der Wicklung L1 einstellt. In Fig. 2B ist der Stromverlauf in der Primärwicklung L1 dargestellt. Der Strom i₁₂ in der Wicklung L1 steigt nun im Zeitpunkt t₀ bis t₁ linear an, wobei der Strom an der Spannung über R3 erkannt und beim Überschreiten des Maximalwertes abgeschaltet wird (Fig. 2B).

Gemäß Fig. 2C, die den Stromverlauf in der Sekundärwicklung L2 zeigt, ist auf der Sekundärseite II der Strom i₃₄ in der Wicklung L2 Null. Während der Energiespeicherphase ist die Diode D3 leitend und die Diode D4 gesperrt, so daß am Anschluß 4 ein positiver Spannungsimpuls bezogen auf die Sekundärmasse entsteht. Damit ist es möglich, den Übertrager mit R6 und Q2 während dieser Phase zu belasten ohne eine negative Spannung zu benötigen. Die Dioden D2 und D4 sind während der Energieabgabephase leitend und die gespeicherte Energie kann abgegeben werden. Bei dieser Schaltungsanordnung wird keine zweite Sekundärwicklung benötigt.

Im Zeitpunkt t₁ wird nun der Transistor Q1 wieder nichtleitend. Damit wird die an der Wicklung L1 liegende Spannung U₁₂ nach dem Abschalten negativ. Der Strom i₁₂ in der Wicklung L1 fällt auf 0 A ab. Durch diese Strom- und Spannungsänderung auf der Primärseite I springt der Strom i₃₄ in der Wicklung L2 auf der Sekundärseite II auf seinen Maximalwert i₃₄ₘₐₓ. Damit liegen die in Fig. 2D und 2E aufgezeigten Spannungen an der Sekundärwicklung L2. Der Strom i₃₄ fällt nun linear bis auf 0 A, wobei zu diesem Zeitpunkt t₃ die Energie abgegeben ist, was von der Zeitdauer der Energiespeicherphase zwischen t₀ und t₁ und der Belastung auf der Sekundärseite abhängig ist. Der Kondensator C2 hält die Spannung an der Sekundärwicklung L2 in etwa auf seinem Niveau (nach t₁), wodurch der 5 Volt-Regler ständig versorgt wird. Die Diode D2 verhindert, daß ein Strom während der Energiespeicherphasse in umgekehrter Richtung, d.h. in Richtung auf die Wicklung L2 fließt.

Demnach ist während der Energiespeicherphase ESP der Transistor Q1 in der Ein-Stellung (leitend) und der Transistor Q2 in der Aus-Stellung (nichtleitend), wobei dagegen während der Energieabgabephase EAP sich auch der Transistor Q1 in der Aus-Stellung befindet. Dies gilt jedoch nur, wenn keine Information übertragen wird. Die Steuerung dazu wird in der primärseitigen Ansteuer- und Auswertelogik A1 und in der sekundärseitigen Ansteuer- und Auswertelogik A2 vorgenommen und die Zeitdauer der Energiespeicherphase ESP hängt von der Energie ab, die auf der Sekundärseite II benötigt wird.

Als nächstes wird nun die Informationsübertragung von der Sekundärseite II auf die Primärseite I während der Energiespeicherphase ESP anhand von Fig. 3A bis 3D erläutert.

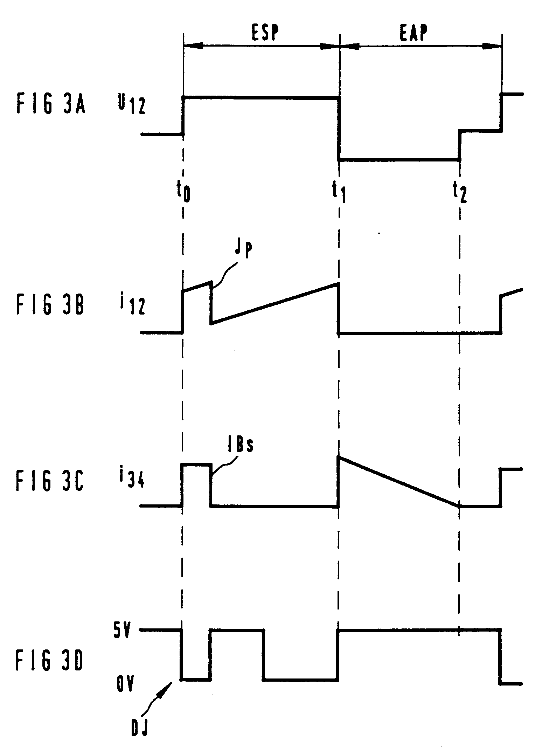

Wie schon in Fig. 2A gezeigt, liegt während der Energiespeicherphase ESP die Spannung U₁₂ an der Primärwicklung L1 und der Strom in der Sekundärwicklung i₃₄ ist Null (Fig. 2C). Während dieser Phase soll nun eine Information von der Sekundärseite II auf die Primärseite I übertragen werden. Dazu wird der sekundärseitige Transistor Q2 kurzzeitig eingeschaltet (leitend), wodurch ein Strombelastungsimpuls IBs aufgrund der Belastung in der Sekundärwicklung L2 entsteht (Fig. 3C). Dieser Strombelastungsimpuls IBs wird nun dem ansteigenden Strom in der Primärwicklung L1 überlagert (Fig. 3B), wodurch ein Stromimpuls Ip (Fig. 3B) in der Primärwicklung L1 entsteht. Dieser Impuls Ip wird nun in der Ansteuer- und Auswertelogik A1 ausgewertet, d.h., er wird einem (nicht gezeigten) Komparator in dieser Logik A1 zugeführt, wodurch die in Fig. 3D gezeigte Dateninformation DI entsteht. Die Fig. 3D zeigt die Stromauswertung auf der Primärseite I mit einem Komparator.

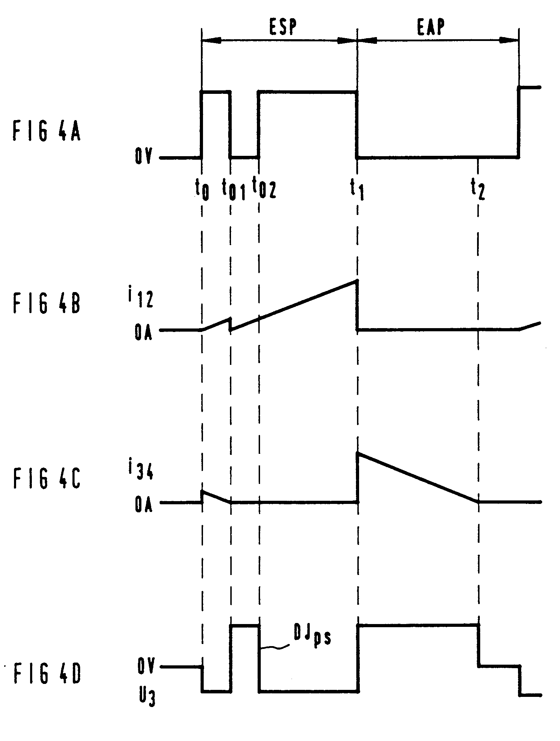

Als nächstes wird die Informationsübertragung von der Primär- auf die Sekundärseite während der Energiespeicherphase anhand von Fig. 4A bis 4D erläutert.

In Fig. 4 zeigt Fig. 4A den Spannungsverlauf an der Primärwicklung L1 zwischen den Anschlüssen 1 und 2, Fig. 4B den Stromverlauf i₁₂ in der Primärwicklung L1, Fig. 4C den Stromverlauf in der Sekundärwicklung L2 und Fig. 4D den Spannungsverlauf an der Sekundärwicklung am Anschluß 3.

Wie Fig. 4A zeigt, wird im Intervall t₀₁ bis t₀₂ die Energiespeicherphase kurzzeitig unterbrochen, d.h., die Ansteuer- und Auswertelogik A1 gibt einen Befehl an den Transistor Q1 aus, kurzzeitig zu öffnen (Q1 nichtleitend). Damit fällt in diesem Intervall der Strom in der Primärwicklung (Fig. 4B) auf Null. Damit entsteht in der Sekundärwicklung L2 im Intervall zwischen t₀₁ und t₀₂ der in Fig. 4C gezeigte Stromverlauf, der gegenüber der in Fig. 3D gezeigten Darstellung zu einem Spannungssprung in Fig. 4D führt, der sekundärseitig in der Ansteuer- und Auswertelogik A2 als Dateninformation ausgewertet wird.

Sorgt man nun dafür, daß die Spannungsunterbrechung (Fig. 4A) auf der Primärseite I und der Strombelastungsimpuls auf der Sekundärseite II zeitlich nicht zusammenfallen, läßt sich die Übertragungsstrecke im Vollduplexbetrieb betreiben. Die Übertragungsstrecke ist sehr niederohmig und damit nicht störanfällig.

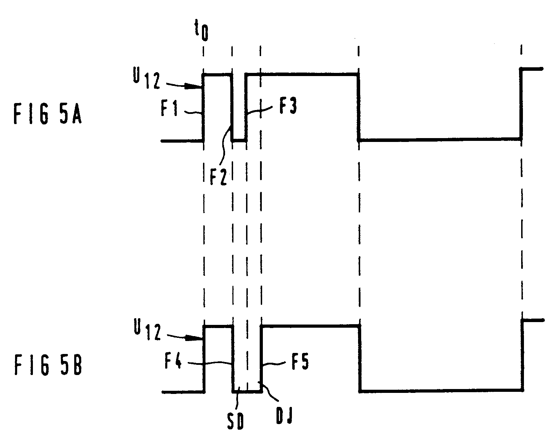

Für die Informationsübertragung muß die Sekundärseite mit der Primärseite synchronsiert werden. Zur Erklärung wird nun auf Fig. 5 verwiesen. Es gibt verschiedene Möglichkeiten zur Synchronisation.

Eine erste Möglichkeit besteht darin, die positive Flanke F1 zum Zeitpunkt t₀ (Fig. 5A) auszunutzen. Dies setzt aber voraus, daß Eigenschwingungen des Übertragers diese Flanke nicht zu sehr verfälschen.

Eine zweite Möglichkeit besteht darin, einen Synchronimpuls während der Energiespeicherphase t₀ auszugeben (Fig. 5A), wobei die positive und negative Flanke F2, F3 zur Synchronisation verwendet werden können.

Wenn eine Information von der Primär- auf die Sekundärseite übertragen werden soll, so besteht eine weitere Möglichkeit zur Synchronisation (Fig. 5B) darin, die Dateninformation in einen Synchronimpuls ID und eine Dateninformation DI mit einem zeitlich vorbestimmten Abstand aufzuteilen, wodurch zur Synchronisation zwei Flanken F4, F5 zur Verfügung stehen.

## Patentansprüche

1. Vorrichtung zur drahtlosen Übertragung von Energie sowie von Daten, mit einem Übertrager (Ü), über den die Energie in einer Richtung und die Daten in beide Richtungen übertragen werden, und mit Schaltungsmittel (A1, A2, P1, P2, Q1, Q2) auf beiden Seiten des Übertragers, durch die der Ablauf der Übertragung gesteuert und ausgewertet wird, **dadurch gekennzeichnet**, daß auf der Sekundärseite des Übertragers (Ü) eine Diode (D2) vorgesehen ist, deren Anode mit einem Anschluß (3) der sekundärseitigen Wicklung (L2) verbunden und in Durchlaßrichtung an einen Spannungsregler (V2) geschaltet ist, daß die Kathode einer weiteren Diode (D3) mit dem Anschluß (3) der sekundärseitigen Wicklung (L2) verbunden ist, und daß eine Diode (D4) vorgesehen ist, deren Kathode mit dem anderen Anschluß (4) der sekundärseitigen Wicklung (L2) verbunden ist, wobei der andere Anschluß (4) über einen Widerstand (R6) und einen Schalttransistor (Q2) mit der sekundärseitigen Masse verbunden ist, und wobei die Wicklungsanschlüsse (3) und (4) mit den Schaltungsmitteln (A2) in Verbindung stehen, über die der sekundärseitige Transistor (Q2) gesteuert wird.

2. Vorrichtung nach Anspruch 1, dadurch gekennzeichnet, daß der Übertrager (Ü) eine primärseitige und eine sekundärseitige Wicklung (L1,L2) mit umgekehrtem Wickelsinn aufweist, wobei eine der Wicklungen (L1) ortsfest im Übertrager (Ü) angeordnet ist, während die andere Wicklung (L2) relativ dazu beweglich ist.

3. Vorrichtung nach Anspruch 2, dadurch gekennzeichnet, daß die ortsfeste Wicklung mit der Lenksäule eines Kraftfahrzeuges und die bewegliche Wicklung mit dem Lenkrad eines Kraftfahrzeuges in Verbindung steht.

4. Vorrichtung nach Anspruch 3, dadurch gekennzeichnet, daß die Primärwicklung des Übertragers dem Chassis des Kraftfahrzeuges zugeordnet wird, während die Sekundärwicklung dem Lenkrad zugeordnet wird.

5. Verfahren zur Energie- und Datenübertragung mit einer Vorrichtung nach Anspruch 1,
wobei während einer Energiespeicherphase eine primärseitige Schaltstrecke (Q1, R3) geschlossen wird,
wobei die Energieübertragung von der Primär- auf die Sekundärseite durch Unterbrechung der primärseitigen Schaltstrecke (Q1, R3) vorgenommen wird,
wobei die Datenübertragung von der Primär- auf die Sekundärseite durch eine kurze Unterbrechung der primärseitigen Schaltstrecke (Q1, R3) während der Energiespeicherphase vorgenommen wird,
wobei die Datenübertragung von der Sekundär- auf die Primärseite durch einen sekundärseitigen Belastungsimpuls während der Energiespeicherphase vorgenommen wird,
wobei die Steuerung der Informationsübertragung über primärseitig und sekundärseitig vorgesehene Ansteuer- und Auswertemittel (A1, A2) vorgenommen wird, und
wobei die Information sowohl auf der Primärseite als auch auf der Sekundärseite in den mit je einem Prozessor in Verbindung stehenden Ansteuer- und Auswertemitteln (A1, A2) ausgewertet wird.

6. Verfahren nach Anspruch 5, bei dem die Datenübertragung von der Sekundärseite auf die Primärseite durch einen Belastungsimpuls auf der Sekundärseite bewirkt wird, wodurch ein Stromimpuls in der Primärwicklung (L1) hervorgerufen wird, der in den Ansteuer- und Auswertemitteln (A1) in einem Komparator ausgewertet wird.

7. Verfahren nach Anspruch 5, bei dem auf der Sekundärseite an einem durch die Widerstände (R4,R5) gebildeten Spannungsteiler die Spannung durch den Prozessor (P2) gemessen wird und diese als Dateninformation auf die Primärseite übertragen und geregelt wird.

8. Verfahren nach Anspruch 5 und 6, bei dem die Ansteuer- und Auswertemittel (A2) auf der Sekundärseite die Belastung so steuern, daß die Daten seriell übertragbar sind.

9. Verfahren nach Anspruch 8, bei dem die Schaltfrequenz auf der Primärseite und auf der Sekundärseite gleich ist und bei der Datenübertragung im Bereich von etwa 125 kHz liegt.

10. Verfahren nach Anspruch 5, bei dem zur Datenübertragung von der Primär- auf die Sekundärseite während der Energiespeicherphase der Spannungsimpuls kurzzeitig auf der Primärseite unterbrochen wird, was einen kurzzeitigen gegenphasigen Spannungsimpuls an der Sekundärwicklung zur Folge hat, wobei der dadurch hervorgerufene Strom in einem Komparator in den sekundärseitigen Ansteuer- und Auswertemitteln (A2) als Dateninformation ausgewertet wird.

11. Verfahren nach Anspruch 10, bei dem der Unterbrechungszeitpunkt der Primärseite auf der Sekundärseite durch vorheriges Festlegen bekannt ist.

12. Verfahren nach einem oder mehreren der Anprüche 5 bis 11, bei dem die Zeitpunkte der Spannungsunterbrechung auf der Primärseite mit dem Zeitpunkt des Belastungsimpulses auf der Sekundärseite zeitlich nicht zusammenfallen.

13. Verfahren nach Anspruch 12, bei dem die Zeitpunkte in der gleichen Schaltphase erfolgen (Vollduplexbetrieb).

14. Verfahren nach Anspruch 5, bei dem zur Übertragung der Daten in beiden oder in einer Richtung die Primärseite mit der Sekundärseite synchronisiert wird.

15. Verfahren nach Anspruch 14, bei dem zur Synchronisation die positive Flanke (F1) zu Beginn der Energiespeicherphase ausgenützt wird.

16. Verfahren nach Anspruch 14, bei dem zur Synchronisation eine der beiden Flanken (F2, F3) des bei der primärseitigen Unterbrechung der Schaltstrecke entstehenden Impulses verwendet wird.

17. Verfahren nach Anspruch 14, bei dem der Datenimpuls in einen Synchronimpuls und in einen Informationsimpuls aufgeteilt wird.

18. Verfahren nach Anspruch 5, bei dem zur Erweiterung des Regelbereichs der Energieübertragung die Daten nur in jeder zweiten Periode übertragen werden.

## Claims

1. Device for wireless transmission of energy and data, having a transformer (Ü) via which the energy is transmitted in one direction and the data is transmitted in both directions, and having switching means (A1, A2, P1, P2, Q1, Q2) on both sides of the transformer, by which the transmission process is controlled and evaluated, characterized in that a diode (D2), the anode of which is connected to a terminal (3) of the secondary winding (L2), is provided on the secondary side of the transformer (Ü) and is connected, forward-biased to a voltage controller (V2), in that the cathode of a further diode (D3) is connected to the terminal (3) of the secondary winding (L2), and in that a diode (D4), the cathode of which is connected to the other terminal (4) of the secondary winding (L2), is provided, the other terminal (4) being connected via a resistor (R6) and a switching transistor (Q2) to the earth on the secondary side, and the winding terminals (3) and (4) being connected to the switching means (A2) by which the transistor (Q2) on the secondary side is controlled.

2. Device according to Claim 1, characterized in that the transformer (Ü) has a primary winding and a secondary winding (L1, L2) with reversed winding sense, one of the windings (L1) being arranged fixed in the transformer (Ü) whilst the other winding (L2) can move relative thereto.

3. Device according to Claim 2, characterized in that the fixed winding is connected to the steering column of a motor vehicle and the movable winding is connected to the steering wheel of a motor vehicle.

4. Device according to Claim 3, characterized in that the primary winding of the transformer is assigned to the chassis of the motor vehicle, whilst the secondary winding is assigned to the steering wheel.

5. Method for energy and data transmission with a device according to Claim 1, a primary-side circuit path (Q1, R3) being closed during an energy storage phase,
the energy transmission from the primary side to the secondary side taking place by interrupting the primary-side circuit path (Q1, R3),
data transmission from the primary to the secondary side taking place by a brief interruption in the primary-side circuit path (Q1, R3) during the energy storage phase,
the data transmission from the secondary side to the primary side taking place by a secondary-side load pulse during the energy storage phase,
the control of the information transmission taking place by means of drive and evaluation means (A1, A2) provided on the primary side and on the secondary side, and
the information being evaluated both on the primary side and on the secondary side in the drive and evaluation means (A1, A2) which are each connected to a processor.

6. Method according to Claim 5, in which the data transmission from the secondary side to the primary side is effected by a load pulse on the secondary side, which causes a current pulse in the primary winding (L2) which is evaluated in the drive and evaluation means (A1) in a comparator.

7. Method according to Claim 5, in which, on the secondary side, the voltage at a potential divider formed by the resistors (R4, R5) is measured by the processor (P2), and this voltage is transmitted as data information to the primary side and controlled.

8. Method according to Claim 5 and 6, in which the drive and evaluation means (A2) control the load on the secondary side in such a way that the data can be transmitted serially.

9. Method according to Claim 8, in which the switching frequency on the primary side and on the secondary side are equal, and in which the data transmission is in the region of approximately 125 kHz.

10. Method according to Claim 5, in which for data transmission from the primary side to the secondary side during the energy storage phase, the voltage pulse is briefly interrupted on the primary side, which causes a brief voltage pulse phase opposition on the secondary winding, the current caused by this being evaluated as data information in a comparator in the drive and evaluation means (A2) on the secondary side.

11. Method according to Claim 10, in which the interruption time of the primary side is known on the secondary side through prior setting.

12. Method according to one or more of Claims 5 to 11, in which the times of the voltage interruption on the primary side do not temporally coincide with the time of the load pulse on the secondary side.

13. Method according to Claim 12, in which the times occur in the same switching phase (full duplex operation).

14. Method according to Claim 5, in which, for transmitting the data in both or one direction the primary side is synchronized with the secondary side.

15. Method according to Claim 14, in which the synchronization involves use of the positive edge (F1) at the start of the energy storage phase.

16. Method according to Claim 14, in which one of the two edges (F2, F3) of the pulse produced during the primary-side break in the switching path is used for the synchronization.

17. Method according to Claim 14, in which the data pulse is divided into a synchronization pulse and an information pulse.

18. Method according to Claim 5, in which the data are transmitted only in every other period, in order to broaden the control range of the energy transmission.

## Revendications

1. Dispositif de transmission, sans fil, d'énergie et de données, comportant un transmetteur (Ü), au moyen duquel l'énergie peut être transmise dans une direction et les données dans les deux directions, et comportant, des deux côtés du transmetteur, des circuits (A1, A2, P1, P2, Q1, Q2) au moyen desquels on commande et on interprète le déroulement de la transmission,
caractérisé
- en ce que, sur le côté secondaire du transmetteur (Ü), est prévue une diode (D2), dont l'anode est reliée à une borne (3) de l'enroulement secondaire (L2) et est branchée, dans le sens passant, à un régulateur de tension (V2),
- en ce que la cathode d'une autre diode (D3) est reliée à la borne (3) de l'enroulement secondaire (L2),
- et en ce qu'il est prévu une diode (D4), dont la cathode est reliée à l'autre borne (4) de l'enroulement secondaire (L2), cette autre borne (4) étant reliée à la masse, côté secondaire, par l'intermédiaire d'une résistance (R6) et d'un transistor de commutation (Q2), et les bornes (3) et (4) de l'enroulement étant reliées aux circuits d'interprétation (A2) par lesquels le transistor (Q2), situé côté secondaire, est commandé.

2. Dispositif suivant la revendication 1, caractérisé en ce que le transmetteur (Ü) présente un enroulement côté primaire (L1) et un enroulement côté secondaire (L2) qui ont des sens d'enroulement inverses, l'un des enroulements (L1) étant monté fixe dans le transmetteur (Ü), tandis que l'autre enroulement (L2) peut se déplacer par rapport à lui.

3. Dispositif suivant la revendication 2, caractérisé en ce que l'enroulement fixe est relié à la colonne de direction d'un véhicule automobile et que l'enroulement mobile est relié au volant de direction de celui-ci.

4. Dispositif suivant la revendication 3, caractérisé en ce que l'enroulement primaire du transmetteur est associé au châssis du véhicule automobile, tandis que l'enroulement secondaire est associé au volant de direction.

5. Procédé de transmission d'énergie et de données à l'aide d'un dispositif suivant la revendication 1, dans lequel :
- pendant une phase de stockage d'énergie, un trajet de conduction (Q1, R3), côté primaire, est fermé,
- la transmission d'énergie depuis le côté primaire vers le côté secondaire est effectué par interruption du trajet (Q1, R3), côté primaire,
- la transmission de données depuis le côté primaire vers le côté secondaire est effectuée, pendant la phase de stockage d'énergie, par une courte interruption du trajet de conduction (Q1, R3), côté primaire,
- la transmission de données depuis le côté secondaire vers le côté primaire est effectuée au moyen d'une impulsion de charge, côté secondaire, pendant la phase de stockage d'énergie,
- la commande de transmission d'information est effectuée par l'intermédiaire de moyens de commande et d'interprétation (A1, A2) prévus côté primaire et côté secondaire, et
- l'information, aussi bien côté primaire que coté secondaire, est interprétée dans les moyens de commande et d'interprétation (A1, A2), reliés chacun à un processeur.

6. Procédé suivant la revendication 5, dans lequel la transmission de données depuis le côté primaire vers le côté secondaire est déclenchée par une impulsion de charge côté secondaire, provoquant ainsi, dans l'enroulement primaire (L1), une impulsion de courant qui est interprétée par un comparateur dans les moyens de commande et d'interprétation (A1).

7. Procédé suivant la revendication 5, dans lequel, côté secondaire, sur un diviseur de tension formé par des résistances (R4, R5), on mesure la tension par le processeur (P2) et cette tension est transmise et régulée, comme information de données, vers le côté primaire.

8. Procédé suivant la revendication 5 et la revendication 6, dans lequel les moyens (A2) de commande et d'interprétation, côté secondaire, commandent la charge de telle façon que les données puissent être transmises de façon séquentielle.

9. Procédé suivant la revendication 8, dans lequel la fréquence de commutation, coté primaire et côté secondaire, est la même, et est, pour la transmission de données, dans la plage de 125 kHz, environ.

10. Procédé suivant la revendication 5, dans lequel, pour la transmission de données depuis le côté primaire vers le côté secondaire, pendant la phase de stockage d'énergie, l'impulsion de tension est interrompue un court instant du côté primaire, ce qui a pour conséquence une impulsion de tension de courte durée en opposition de phase sur l'enroulement secondaire, tandis que le courant qui en résulte est interprété dans un comparateur comme une information de données dans les moyens de commande et d'interprétation (A2).

11. Procédé suivant la revendication 10, dans lequel l'instant d'interruption, coté primaire, est connu, du côté secondaire, grâce à une détermination préalable.

12. Procédé suivant l'une ou plusieurs des revendications 5 à 11, dans lequel les instants des interruptions de tension, côté primaire, ne coïncident pas chronologiquement avec l'instant d'interruption de l'impulsion de charge, côté secondaire.

13. Procédé suivant la revendication 12, dans lequel les instants se produisent dans la même phase de commutation (fonctionnement en duplex total).

14. Procédé suivant la revendication 5, dans lequel, pour la transmission de données dans les deux directions, ou dans une seule direction, le côté primaire est synchronisé avec le côté secondaire.

15. Procédé suivant la revendication 14, dans lequel, pour la synchronisation, on utilise le flanc positif (F1) au début de la phase de stockage d'énergie.

16. Procédé suivant la revendication 14, dans lequel, pour la synchronisation, on utilise l'un des deux flancs (F2, F3) de l'impulsion résultant de l'interruption du trajet de conduction.

17. Procédé suivant la revendication 14, dans lequel, l'impulsion de données est divisée en une impulsion de synchronisation et en une impulsion d'information.

18. Procédé suivant la revendication 5, dans lequel, pour élargir la zone de réglage de la transmission d'énergie, les données ne sont transmises que toutes les deux périodes.
